# EUROPEAN PATENT APPLICATION

(11) **EP 1 674 882 A1**
(43) Date of publication of application: **28.06.2006**
(21) Application number: 05028170.8
(22) Date of filing: 22.12.2005
(51) Int. Cl.: G01S 7/03, H01Q 1/52, H01Q 1/42, H01Q 17/00

(54) **Radar device**

(30) Priority: 27.12.2004 JP 2004378278
(71) Applicant: TDK Corporation, Chuo-ku, Tokyo 103-8272 (JP)
(72) Inventor: Ikeda, Hiroshi, Chuo-ku Tokyo 103-8272 (JP)
(74) Representative: Degwert, Hartmut

(57) **Abstract**

A radar device which is installed in a vehicle or the like needs to detect a target at a short distance from several tens of centimeters to several tens of meters and, therefore, has a problem that a reflected wave from the target may be reflected by a front case of the radar device and then reflected by the target again to be received as a secondary echo by itself. To solve this problem, it is an object of the present invention to provide a radar device again that can prevent multi-reflection to accurately measure a distance to a target in a short range.

In a radar device according to the present invention, a surface of a frame body provided around a transmitting antenna and a receiving antenna is shaped so that a reflected wave from a target may not be returned in a direction in which a transmitting wave is transmitted from the transmitting antenna.

## Description

### BACKGROUND OF THE INVENTION

### Field of the Invention

The present invention relates to a radar device which prevents multi-reflection of a reflection wave from a target at a short distance.

### 2. Description of the Related Art

Recently, a radar device is installed in a vehicle for a purpose of collision prevention or auto-cruise. In such a vehicle-installed radar device, a round-trip distance to a target is obtained by integrating a light velocity over a lapse of time from a point in time when a pulse transmitting wave is transmitted to a point in time when a reflected wave from the target is received, so that the lapse of time from the moment of transmission of the pulse transmitting wave to the moment of reception of the reflected wave from the target is measured to thereby calculate the distance to the target.

After having transmitted a transmitting pulse wave, such a radar device prepares for receiving of a receiving pulse wave reflected from a target at a short distance. A radar device which is installed in a vehicle or the like needs to detect a target at a short distance from several tens of centimeters to several tens of meters and, therefore, has a problem that a reflected wave from the target may be reflected by a front case of the radar device and then reflected by the target again to be received as a secondary echo by the radar device itself.

In particular when the target is in a close range, the reflected wave is multi-reflected without being attenuated, so that the target may be mistakenly decided to be distant by as much as an integral multiple of an actual distance, thus leading to misdetection.

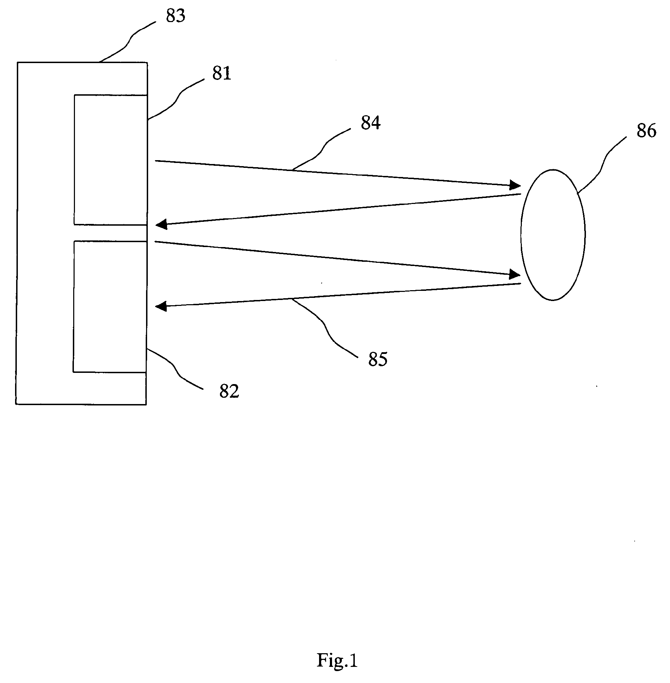

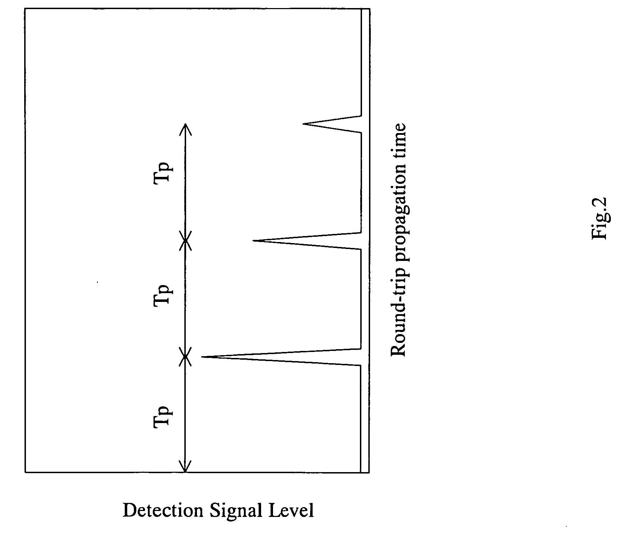

Multi-reflection that may occur between a radar device and a target is described with reference to FIG. 1. In FIG. 1, when a transmitting wave 84 is transmitted from a transmitting antenna 81, the transmitting wave is repeatedly multi-reflected between a target 86 and a frame body 83 of the radar device, thus resulting in a multi-reflected wave 85 being received by a receiving antenna 82. The multi-reflected wave received by the receiving antenna 82 is detected as a secondary echo, a tertiary echo,..., for each time Tp that corresponds to a round-trip propagation lapse of time between the radar device and the target as shown in FIG. 2.

Conventionally, such a multi-reflected wave has been processed by such a method (see Japanese Patent Application Laid-open No.H8-082671 for example) that a target detected to be at a smallest distance may be displayed as a real image and the other images may not be displayed by recognizing them to be virtual images due to multi-reflection through signal processing. That is, in FIG. 2, the reflected waves other than the signal detected first are considered to be of virtual images and removed from display through signal processing.

### SUMMARY OF THE INVENTION

However, there are some cases where an echo removed by the signal processing may have been reflected by an actually existing target. Therefore, it is difficult to decide whether an echo is formed by multi-reflecting or by reflecting from any other actual target, in the signal processing. In particular, if a vehicle-installed radar device removes a reflected wave from a target that should exist originally, it is undesirable from a viewpoint of traffic safety. If an echo due to multi-reflection is decided to be a reflected wave from a target, a virtual image that should not exist originally may possibly be decided to be a target.

In view of the above problems, it is an object of the present invention to provide a radar device that can prevent multi-reflection to accurately measure a distance to a target at a short distance.

To solve the above-described problems, a radar device according to the present invention shapes a surface of a frame body provided around a transmitting antenna and a receiving antenna in such a manner that a reflected wave from a target may not return in a direction in which a transmitting wave is transmitted from the transmitting antenna.

Specifically, a first aspect of the present invention is a radar device including a transmitting antenna which transmits a transmitting wave, a receiving antenna which receives a reflected wave, and a frame body provided around the transmitting antenna and the receiving antenna, wherein a surface of the frame body is diagonal to a plane that is perpendicular to a direction in which the transmitting wave is transmitted from the transmitting antenna.

In the radar device according to the first aspect of the present invention, the surface of the frame body is diagonal to the plane that is perpendicular to the direction in which a transmitting wave is transmitted from the transmitting antenna, so that even if the transmitting wave transmitted from the transmitting antenna is reflected by a target, and the reflected wave is reflected again by the frame body, this twice-reflected wave can be prevented from being returned toward the target. Therefore there can be provided with a radar device which can measure a distance to the target accurately.

A second aspect of the present invention is to provide a radar device including a transmitting antenna which transmits a transmitting wave, a receiving antenna which receives a reflected wave, and a frame body provided around the transmitting antenna and the receiving antenna, wherein the frame body has a curved surface toward a direction in which the transmitting wave is transmitted from the transmitting antenna.

In the radar device according to the second aspect of the present invention, the frame body has a curved surface toward a direction in which a transmitting wave is transmitted from the transmitting antenna, so that even if the transmitting wave transmitted from the transmitting antenna is reflected by a target, and the reflected wave is reflected again by the frame body, this twice-reflected wave can be suppressed from being returned toward the target. Therefore there can be provided with a radar device which can measure a distance to the target accurately.

The first or second aspect of the present invention may further include an electric wave absorber on a part of surface of the frame body.

According to the present aspect, the electric wave absorber is attached to a part of the surface of the frame body, so that a transmitting wave transmitted from the transmitting antenna is reflected by a target and the reflected wave can be prevented from being returned toward the target. Therefore there can be provided with a radar device which can measure a distance to the target accurately.

In the first or second aspect of the present invention, a radar device according to any one of the above aspects further includes a radome which covers the transmitting antenna and the receiving antenna in a direction in which a transmitting wave is transmitted from the transmitting antenna and an electric wave absorber provided at least on a part of the radome except a region that faces the transmitting antenna and the receiving antenna.

According to the present aspect, the electric wave absorber is attached to the radome which covers the transmitting antenna and the receiving antenna, except the region that faces the transmitting antenna and the receiving antenna, it is possible to relax transmission and reflection of radio waves toward an undesired direction and reception of the radio waves from the undesired direction, thereby providing a radar device that can measure a distance to a target accurately.

### BRIEF DESCRIPTION OF THE DRAWINGS

FIG. 1 is an explanatory diagram of multi-reflection that may occur between a radar device and a target.
FIG. 2 is an explanatory graph of a multi-reflected wave received by a receiving antenna 82.
FIG. 3 is an explanatory front view of one example of a radar device according to the present invention.
FIG. 4 is a cross sectional view taken along line A-A' of the radar device of FIG. 3.
FIG. 5 is another cross sectional view taken along line A-A' of the radar device of FIG. 3.
FIG. 6 is an explanatory front view of one example of a radar device according to the present invention.
FIG. 7 is a cross sectional view taken along line B-B' of the radar device of FIG. 6.
FIG. 8 is an explanatory front view of one example of a radar device according to the present invention.
FIG. 9 is a cross sectional view taken along line C-C' of the radar device of FIG. 8.

### DESCRIPTION OF THE PREFERRED EMBODIMENTS

The following will describe embodiments of the present invention with reference to drawings. However, the present invention is not limited to the following embodiments.

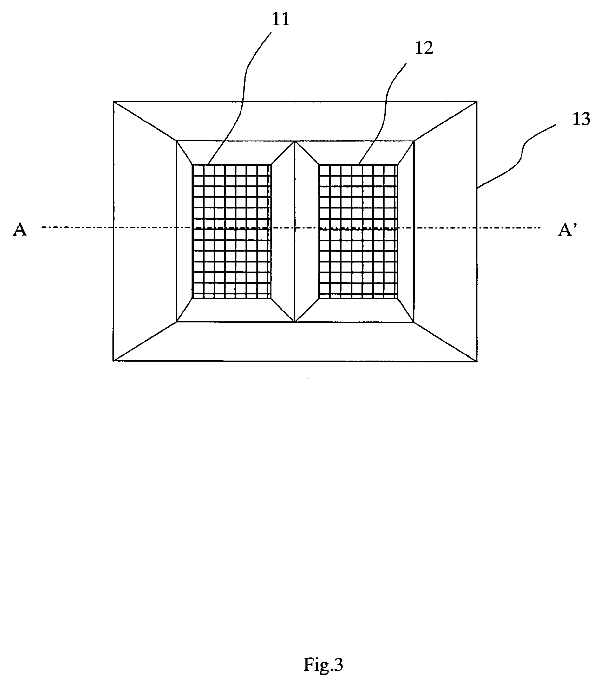

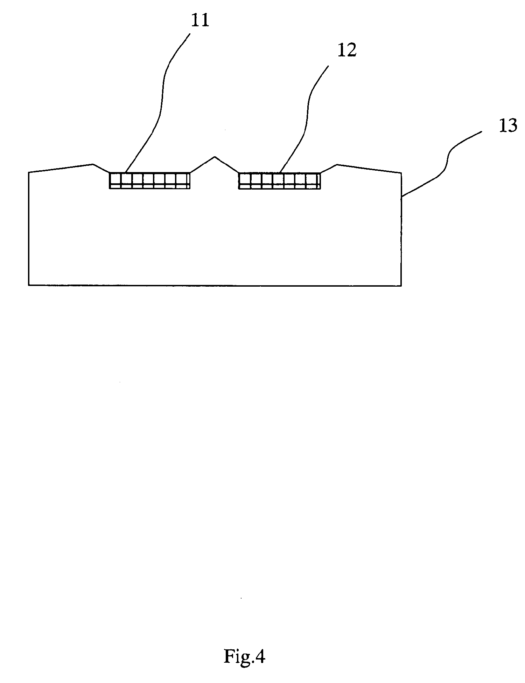

FIG. 3 is an explanatory front view of one example of a radar device according to the present invention. FIG. 4 is a cross sectional view taken along line A-A' of the radar device of FIG. 3. In FIGS. 3 and 4, numeral 11 indicates a transmitting antenna for transmitting a transmitting wave, numeral 12 indicates a receiving antenna for receiving a reflected wave, and numeral 13 indicates a frame body provided around the transmitting antenna 11 and the receiving antenna 12. FIG. 4 does not show a driver circuit for driving the transmitting antenna, a reception circuit for amplifying a receiving wave from the receiving antenna, and the like.

The frame body 13 will support the transmitting antenna 11 and the receiving antenna 12 and suppresses a radio wave from leaking to the receiving antenna 12 from the transmitting antenna 11. Preferably the frame body 13 is made of metal or a resin plated with metal. In FIG. 4, the frame body 13 protrudes above a plane of the transmitting antenna 11 and the receiving antenna 12 in such a manner as to surround periphery of these antennas. A protrusion between the transmitting antenna 11 and the receiving antenna 12 will suppress leakage from the transmitting antenna 11 to the receiving antenna 12, a protrusion around the transmitting antenna 11 will restrict transmission from the transmitting antenna 11 to an unnecessary direction, and a protrusion around the receiving antenna 12 will restrict reception by the receiving antenna 12 from an unnecessary direction.

As can be seen from FIG. 4, a surface of the frame body 13 is arranged to be diagonal to a plane that is perpendicular to a direction in which a transmitting wave is transmitted from the transmitting antenna 11. Even if a transmitting wave transmitted from the transmitting antenna 11 is reflected by a target and then the reflected wave is reflected again by the frame body, this twice-reflected wave can be prevented from being returned to the target owing to the diagonal surface of the frame body 13.

Although the surface of the frame body 13 has been protruded in the above description, the surface of the frame body 13 may be diagonal to a plane that is perpendicular to a direction in which a transmitting wave is transmitted from the transmitting antenna 11 in such a manner that the surface of the frame body 13 may caves in when it is not necessary to suppress leakage from the transmitting antenna 11 to the receiving antenna 12, restrict transmission from the transmitting antenna 11 to an unnecessary direction, restrict reception by the receiving antenna 12 from an unnecessary direction, and the like.

Preferably the surface of the frame body 13 is diagonal at an angle of five degrees or more. At the angle of at least five degrees, even if the reflected wave is reflected by the frame body again, the twice-reflected wave can be prevented from being returned to the target. Alternatively, the surface of the frame body 13 is preferably diagonal at an angle of 45 degrees or less. At the angle of 45 degrees or less, even if the reflected wave reflected by the frame body again, the twice-reflected wave can be prevented from being made incident upon the transmitting antenna.

As described above, the surface of the frame body 13 is diagonal to the plane that is perpendicular to the direction in which a transmitting wave is transmitted from the transmitting antenna 11, so that even if the transmitting wave transmitted from the transmitting antenna 11 is reflected by a target, and then the reflected wave is reflected again by the frame body, this twice-reflected wave can be prevented from being returned toward the target, thereby providing a radar device that can measure a distance to the target accurately.

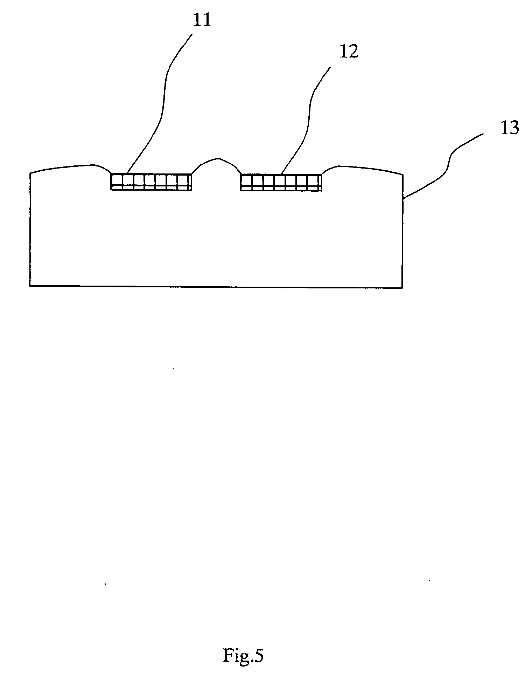

The surface of the frame body 13 may be configured to be curved. FIG. 5 shows another example of the radar device. FIG. 5 is a cross sectional view of a radar device having the same front view as the radar device of FIG. 3, for example, a cross sectional view taken along line A-A' shown in FIG. 3. In FIG. 5, the same symbols as those of FIG. 4 indicate the same components. FIG. 5 does not show a driver circuit for driving the transmitting antenna, a reception circuit for amplifying a receiving wave from the receiving antenna, and the like.

The radar device of FIG. 5 is different from that shown in FIG. 4 in shape of the frame body. The radar device shown in FIG. 5 is the same as that shown in FIG. 4 in that the frame body protrudes above a plane of the transmitting antenna 11 and the receiving antenna 12 in such a manner as to surround peripheries of these antennas.

As can be seen from FIG. 5, the frame body 13 has a curved surface toward a direction in which a transmitting wave is transmitted from the transmitting antenna 11. The transmitting wave transmitted from the transmitting antenna 11 is reflected by a target, even if the reflected wave is reflected again by the frame body, the twice-reflected wave can be suppressed from being returned toward the target owing to the curved surface of the frame body 13.

Although the surface of the frame body 13 has been protruded in the above description, the frame body 13 may have a curved surface toward a direction in which a transmitting wave is transmitted from the transmitting antenna 11 in such a manner that the surface of the frame body 13 may caves in when it is not necessary to suppress leakage from the transmitting antenna 11 to the receiving antenna 12, restrict transmission from the transmitting antenna 11 to an unnecessary direction, restrict reception by the receiving antenna 12 from an unnecessary direction, and the like.

Further, the frame body may have a plurality of curved surfaces rather than one curved surface. For example, the plurality of curved surfaces may be combined in such a manner that these surfaces may not face a direction in which a transmitting wave is transmitted from the transmitting antenna 11.

Preferably a curvature radius of the curved surfaces of the frame body 13 is at least five times as a width of the frame body. For example, if the width of the frame body is 1cm, the radius is at least 5cm preferably. As far as the radius is at least five times as the width of the frame body, it is easy to form the frame body, even if the reflected wave is reflected again by the frame body, the twice-reflected wave can be suppressed in terms of ratio of it being returned toward the target.

As described above, since the frame body 13 has a curved surface toward a direction in which a transmitting wave is transmitted from the transmitting antenna 11, the transmitting wave transmitted from the transmitting antenna 11 is reflected by a target, even if the reflected wave is reflected again by the frame body, the twice-reflected wave can be suppressed from being returned toward the target, thereby providing a radar device that can measure a distance to the target accurately.

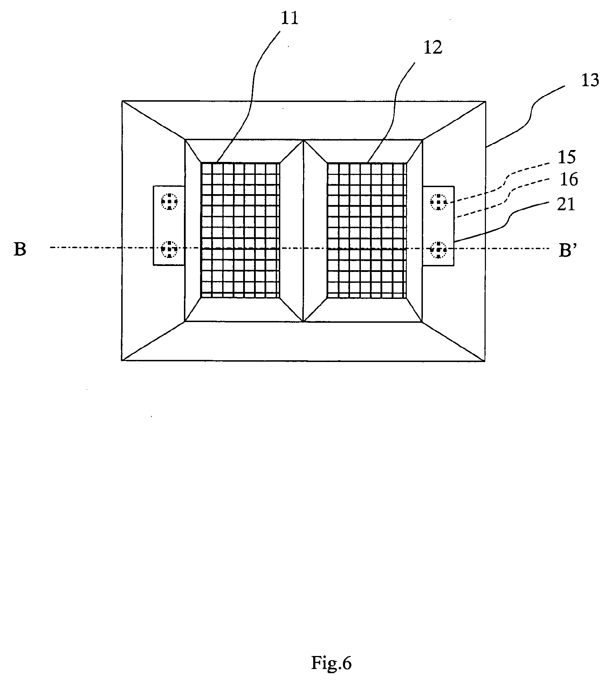

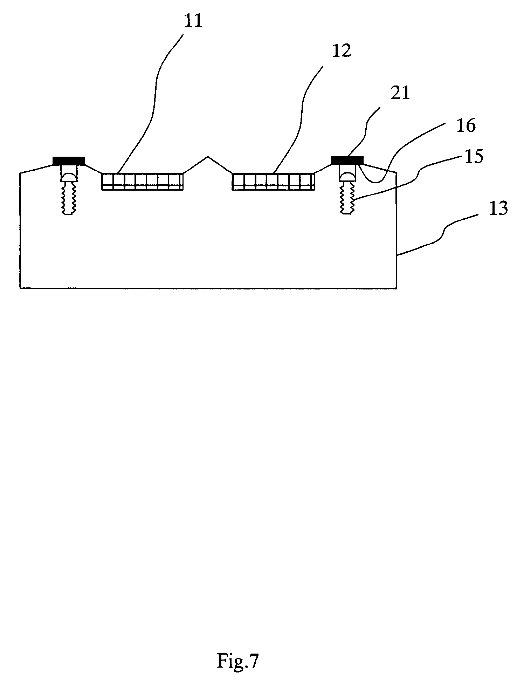

The following will describe an embodiment of another radar device according to the present invention with reference to FIGS. 6 and 7. FIG. 6 is an explanatory front view of one example of this embodiment of the radar device according to the present invention. FIG. 7 is a cross sectional view taken along line B-B' of the radar device of FIG. 6. In FIGS. 6 and 7, numeral 11 indicates a transmitting antenna for transmitting a transmitting wave, numeral 12 indicates a receiving antenna for receiving a reflected wave, numeral 13 indicates a frame body provided around the transmitting antenna 11 and the receiving antenna 12, numeral 15 indicates a screw for fixing the antennas or the like, numeral 16 indicates a screw-cramp unit where the screw 15 is driven, and numeral 21 indicates an electric wave absorber. In FIG. 6, the screw-cramp unit 16 and the screw 15 cannot be seen from an outside and so are indicated by using a broken line. FIG. 7 does not show a driver circuit for driving the transmitting antenna, a reception circuit for amplifying a receiving wave from the receiving antenna, and the like.

This radar device is different from those shown in FIGS. 3, 4, and 5 in that the screw-cramp unit 16 is provided on a surface of the frame body and the screw 15 is driven into a screw hole formed in the screw-cramp unit 16. On an upper surface of the screw-cramp unit 16, the electric wave absorber 21 is provided. There is a case where the surface of the screw-cramp unit 16 must be set perpendicular to a direction in which a transmitting wave is transmitted from the transmitting antenna 11. In such a case, a reflected wave from a target may possibly be reflected again by this screw-cramp unit toward the target.

To counter such a situation, the electric wave absorber 21 is attached to the screw-cramp unit 16 to prevent the reflected wave from the target from being reflected again toward the target. Preferably the electric wave absorber is made of a ferrite. The electric wave absorber may be attached not only to a surface perpendicular to a direction in which a transmitting wave is transmitted from the transmitting antenna 11 but also to the above-described diagonal surface or the curved surface.

As described above, since an electric wave absorber is attached to a part of a surface of the frame body 13, especially, to its surface perpendicular to a direction in which a transmitting wave is transmitted from the transmitting antenna 11, the transmitting wave transmitted from the transmitting antenna 11 is reflected by a target, and the reflected wave can be prevented from being reflected again toward the target, thereby providing a radar device that can measure a distance to the target accurately.

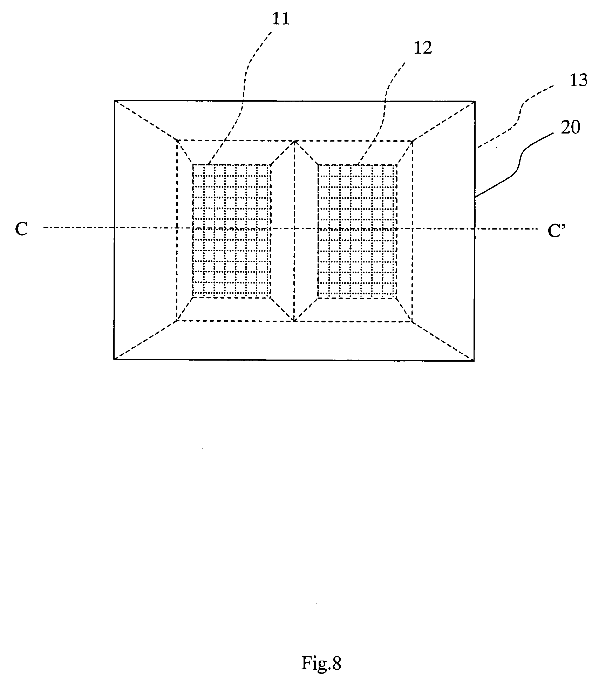

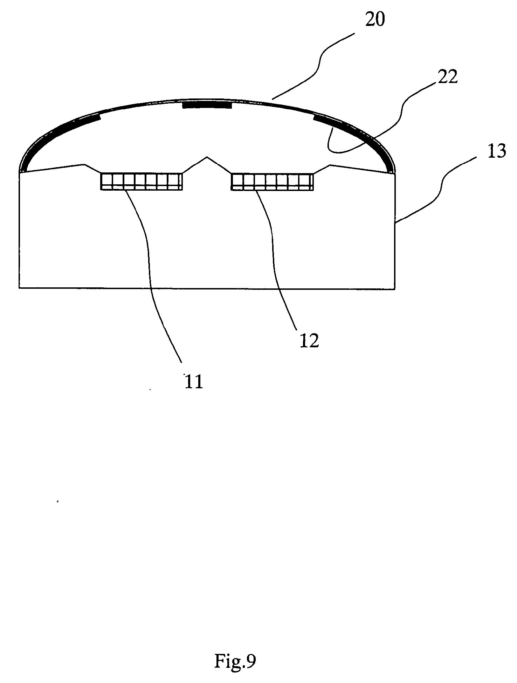

The following will describe an embodiment of a further radar device according to the present invention with reference to FIGS. 8 and 9. FIG. 8 is an explanatory front view of one example of this embodiment of the further radar device according to the present invention. FIG. 9 is a cross sectional view taken along line C-C' of the radar device of FIG. 8. In FIGS. 8 and 9, numeral 11 indicates a transmitting antenna for transmitting a transmitting wave, numeral 12 indicates a receiving antenna for receiving a reflected wave, numeral 13 indicates a frame body provided around the transmitting antenna 11 and the receiving antenna 12, numeral 20 indicates a radome for covering the transmitting antenna 11 and the receiving antenna 12, and numeral 22 indicates an electric wave absorber provided on a part of the redome. In FIG. 8, the transmitting antenna 11, the receiving antenna 12, and the frame body 13 cannot be seen from an outside and so are indicated by using a broken line. In FIG. 8, an electric wave absorber is not shown because it cannot be seen from the outside either. FIG. 9 does not show a driver circuit for driving the transmitting antenna, a reception circuit for amplifying a receiving wave from the receiving antenna, and the like.

This radar device is different from the above-described radar devicees in that it includes the radome 20 for covering the transmitting antenna 11 and the receiving antenna 12 and the electric wave absorber 22 is attached to regions of an inner surface of the radome 20 except those that face the transmitting antenna 11 and the receiving antenna 12. If such an electric wave absorber is provided to the radar device of the above-described embodiments, it is possible to relax transmission and reflection of a radio wave to an undesired direction and reception of a radio wave from an undesired direction.

Further, even in a case where a part of a surface of the frame body 13 must be set perpendicular to a direction in which a transmitting wave is transmitted from the transmitting antenna 11 or a case where it is difficult to curve a part of the surface of the frame body 13, it is possible to relax transmission and reflection of a radio wave toward an undesired direction and reception of a radio wave from an undesired direction.

Preferably the electric wave absorber is made of a ferrite. Further, the electric wave absorber may be attached not only to the inner surface of the radome but also to an outer surface of the radome or even contained in the radome.

As described above, the electric wave absorber 22 is attached to regions of the radome 20 that covers the transmitting antenna 11 and the receiving antenna 12 except those regions that face the transmitting antenna 11 and the receiving antenna 12, so that it is possible to relax transmission and reflection of a radio wave toward an undesired direction and reception of a radio wave from an undesired direction, thereby providing a radar device that can measure a distance to a target accurately.

A radar device of the present invention can be applied as a vehicle-installed apparatus for a purpose of prevention of collision of vehicles or auto cruise and also as a fixed type apparatus.

## Claims

1. A radar device comprising:
a transmitting antenna which transmits a transmitting wave;
a receiving antenna which receives a reflected wave; and
a frame body provided around the transmitting antenna and the receiving antenna,
wherein a surface of the frame body is diagonal to a plane that is perpendicular to a direction in which the transmitting wave is transmitted from the transmitting antenna.

2. A radar device comprising:
a transmitting antenna which transmits a transmitting wave;
a receiving antenna which receives a reflected wave; and
a frame body provided around the transmitting antenna and the receiving antenna,
wherein the frame body has a curved surface toward a direction in which the transmitting wave is transmitted from the transmitting antenna.

3. The radar device according to claim 1 or 2, further comprising an electric wave absorber on a part of the surface of the frame body.

4. The radar device according to claim 1,2 or 3, further comprising:
a radome which covers the transmitting antenna and the receiving antenna in a direction in which a transmitting wave is transmitted from the transmitting antenna; and
an electric wave absorber provided to at least a part of the radome except regions that face the transmitting antenna and the receiving antenna.
